# EUROPEAN PATENT SPECIFICATION

(11) **EP 1 246 782 B1**
(45) Date of publication and mention of the grant of the patent: **22.11.2006**
(21) Application number: 00952807.6
(22) Date of filing: 24.08.2000
(51) Int. Cl.: C04B 24/00, C04B 24/10, C04B 24/16, C04B 24/18, C04B 24/22, C04B 24/24, C04B 24/26, C04B 24/28, C04B 24/38, C04B 22/00, C04B 28/02

(54) **EXTRUDABLE CEMENTITIOUS MATERIAL**
EXTRUDIERBARES ZEMENTMATERIAL
MATIERE CEMENTEUSE EXTRUDABLE

(30) Priority: 26.08.1999 AU PQ246599
(43) Date of publication of application: 09.10.2002
(73) Proprietor: James Hardie International Finance B.V., 1077 ZX Amsterdam (NL)
(72) Inventor: GOODWIN, Peter Cole, Rosehill, NSW 2142 (AU); PORTER, Benjamin, Douglas, Dharruk, NSW 2770 (AU); GORINGE, Nilmini, Sureka, Guildford, NSW 2161 (AU); JIANG, Chongjun, Belmore, NSW 2192 (AU)
(74) Representative: Jackson, Richard Eric
(86) International application number: PCT/AU2000/001001
(87) International publication number: WO 2001/016048

(56) References cited:
- WO-A-96/40598
- AU-A- 1 306 792
- AU-A- 4 494 885
- AU-A- 5 592 986
- JP-A- 2 283 646
- JP-A- 6 127 992
- US-A- 4 846 889
- US-A- 5 352 290
- US-A- 5 387 626
- US-A- 5 453 123
- US-A- 5 470 383
- US-A- 5 658 624
- DATABASE WPI Section Ch, Week 198712 Derwent Publications Ltd., London, GB; Class A93, AN 1987-084032 XP002245538 & JP 62 036055 A (SANYO CHEM IND LTD), 17 February 1987 (1987-02-17)
- DATABASE WPI Section Ch, Week 198036 Derwent Publications Ltd., London, GB; Class A93, AN 1980-62943C XP002245543 & JP 55 095654 A (TOYO SODA MFG CO LTD), 21 July 1980 (1980-07-21)

## Description

### TECHNICAL FIELD

The present invention relates to building products and particularly fibre reinforced cement building products.

### BACKGROUND ART

Fibre reinforced cement boards and other products have been widely used as materials for walls, ceilings, roofs, floors etc: of buildings and for substitutes for wood trim, frames etc.

There are many methods for forming and shaping such FRC products including Hatschek sheet process. Mazza pipe process, Magnani sheet process, injection moulding, hand lay-up, casting, filter pressing, roll forming etc.

Extrusion of fibre cement products has been performed on a limited basis but it has a number of difficulties which have reduced its commercial viability. In the extrusion process, the cementitious slurry or paste is forced through a die and the material can be subjected to elevated pressures. For this reason, it is important that the slurry or paste has good flow characteristics. The cementitious formulation often contains elements that are present almost entirely as process aids, increasing the flow properties, the shape retention properties or enhancing the surface finish. A common type of these additives can be broadly classified as viscosity enhancing agents (VEA) or 'binders'. A principal function of these is to increase the viscosity of the liquid phase, and to counter problems such as segregation of the liquid and solid phases ('water retention'), lack of shape retention, non uniform dispersion of the solid components etc.

For materials such as clays extruded in the brick and tile industry, the inherent good flow properties of the clay mean that the use of such VEA's may be minimised, and therefore cheap. However when the solids suspensions that require forming are not plastic (such as cementitious slurries or pastes), and inherently resistant to flow, the additives are often expensive high molecular weight organic polymers. Further, the demand for viscosity enhancing agents can be increased by the presence of reinforcing fibres, especially if these are hard to disperse or do not have good water retention characteristics.

Asbestos generally has better dispersion and water retention properties than pulp fibres, and when used as reinforcement in cementitious compositions, require less extensive use of viscosity enhancing agents, however, as is well-known in the art, the use of asbestos fibres is outlawed in many countries and is undesirable even in those countries where its use is legal.

Accordingly, previous efforts in finding reinforcing fibres for extrudable cementitious pastes have concentrated on non-asbestos fibres and, in particular, choosing or treating such non-asbestos fibres so that their dispersion and water retention characteristics make them suitable for use in extrusion moulding with minimal use of viscosity enhancing agents. For instance, US patent no 5,891,374 discloses a process for producing a fibre reinforced cement matrix composite. In this document, hydraulic cement, water and low quantities of water soluble binder are mixed together with synthetic fibres to produce an extruded and cured composite product. Optionally, a water reducing agent may be added to assist in preferential alignment of the fibres in the load bearing direction.

Such synthetic fibres are commonly used. However, they are expensive and some are unable to be cured at high temperatures such as in an autoclave. Currently, wood pulp fibres remain the primary fibre of choice for reinforcing cement composites for building materials, where they show excellent performance with regard to mechanical strength, toughness and durability at a low cost. However, extrudable cement compositions containing wood pulp fibres have very stringent requirements for rheology modification and require expensive high molecular weight organic polymers as viscosity enhancing agents.

It is believed that the viscosity enhancing agent performs two functions. Firstly, it acts as a high solid suspension thickener to increase the water retention properties of the slurry, and secondly, it also lubricates the suspended particles thereby allowing the high solid suspension to flow under deformation without phase separation and segregation.

The effectiveness of such a viscosity enhancing agent is believed to be a combination of three actions, namely:
adsorption of water by long-chain polymer molecules, increasing viscosity of the mixed water,
association of adjacent polymer chains, further blocking the motion of water, and
intertwining and entangling of the polymer chains, thereby behaving in a sheer thinning manner.

For suspensions involving cement and pulp fibre that are processed by extrusion, the commonly used viscosity enhancing agents are high viscosity cellulose ethers such as methyl cellulose, hydroxypropyl methyl cellulose or hydroxyethyl methyl cellulose. US Patent 5,047,086 discloses the use of extremely high viscosity (>80,000 cps @ 2% solution at 20° C) alkylcellulose and/or hydroxyalkylalkylcellulose at 0.2-1 wt % levels in the preparation of these compositions. This patent also discloses that if lower viscosity (12,000-40,000 cps @ 2% solution at 20° C) grades of these compounds (akin to those used in asbestos fibre/cement extrusion compositions) are used, much higher addition levels are required.

Even when mouldings are made with such high viscosity grade agents in an effort to minimise the quantity used, the cost ratio of viscosity enhancing agent to the total cost of the extruded moulding can be in the order of one fourth to one half. Thus it is clear that any method of reducing the cost and/or amount of viscosity enhancing agents required to attain excellent mouldability, is greatly to be desired.

In addition to the cost aspect, highly effective viscosity enhancing agents like hydroxypropyl methylcellulose (HPMC) and hydroxyethyl methylcellulose (HEMC) experience a phenomenon known as high temperature gelation. That is, the viscosity of the agent undergoes a sharp increase when the temperature exceeds a specific limiting temperature, known as the gel temperature. The gel temperature of these viscosity enhancing agents varies with the exact chemistry (i.e. degree of substitution etc.). Though this phenomenon can be useful in some applications, it is limiting in others. For example, cooling jackets are sometimes required to counter the temperature rise in the extruder barrel during long periods of fast running, to keep the extrudate below the gel temperature of the viscosity enhancing agent being used. As a result, in some instances viscosity enhancing agents with higher gel temperatures are preferred to avoid this complication. Hence, the ability to use a type of viscosity enhancing agent that does not undergo thermal gelation (like hydroxyethyl cellulose (HEC)) would be a great advantage in certain applications.
The applicant has found that by addition of a suitable dispersion agent, the efficacy of a viscosity enhancing agent in the extrusion of a cementitious material can be increased. The reference to increasing the efficacy of the viscosity enhancing agent refers to the addition of the suitable dispersion agent sufficient to provide one of three results.
i) maintaining extrudability with less viscosity enhancing agent as compared to the conventional dosage without dispersion agent,
ii) maintaining extrudability with use of lower grade (cheaper) viscosity enhancing agent than is conventionally used, or
iii) improving extrudability for the same quantity of viscosity enhancing agent as compared to the conventional dosage.

Unless the context clearly requires otherwise, throughout the description and the claims, the words 'comprise', 'comprising', and the like are to be construed in an inclusive sense as opposed to an exclusive or exhaustive sense; that is to say, in the sense of "including, but not limited to".

The present invention provides the use of one or more dispersion agents in the extrusion of a cementitious material for the purposes of increasing the efficacy of a viscosity enhancing agent during extrusion, being a use wherein the viscosity enhancing agent is provided as 0.3 to 5 % by weight of dry solids of the cementitious material and the dispersion agent is provided as 0.05 to 0.5% by weight of dry solids of the cementitious materiaL

Dispersion agents, also known as plasticisers or super plasticisers, have long been used in the concrete industry to improve paste workability or to increase fluidity. The attraction forces existing amongst the cement particles that cause agglomeration are neutralised by adsorption of anionic polymers. The dispersion of these cement particles forces existing amongst the cement particles that cause agglomeration are neutralised by adsorption of anionic polymers. The dispersion of these cement particles is related to the electrical repulsion produced by the absorption of the negatively charged group. This mechanism has been confirmed in sulphonated-type dispersion agents such as sulphonated melamine formaldehyde and sulphonated naphthalene formaldehyde. The dispersion mechanism for acrylic polymers is believed to be ascribed to a steric hindrance effect rather than electrostatic repulsion. These dispersion agents, however, have not been used as rheology modifiers in fibre reinforced cement slurry.

The applicant has found a surprising synergy between viscosity enhancing agents and dispersion agents. The combination of viscosity enhancing agent and dispersion agent is far superior in terms of rheology modification than either component alone. The addition of the dispersion agent also allows use of a far broader range of viscosity enhancing agents than have otherwise been proposed. To explain, as mentioned above, the most common viscosity enhancing agents are hydroxypropylmethyl cellulose, hydroxyethylmethyl cellulose and methyl cellulose. These products are quite expensive and accordingly large additions are preferably avoided.

By combining the viscosity enhancing agent with a dispersion agent, the effectiveness of the viscosity enhancing agent is increased, thereby improving its extrudability, ie ability to flow under applied force, or reducing the quantity of viscosity enhancing agent required to maintain extrudability. Further, cheaper viscosity enhancing agents can be used such as lower grade hydroxypropylmethyl cellulose or hydroxyethyl cellulose. These cheaper viscosity enhancing agents can be around half the cost of high grade cellulose ethers.

The current invention enables the forming of compositions with improved mouldability and workability or alternatively the reduction of cost by allowing the use of less viscosity enhancing agents and/or the use of lower (cheaper) grades of viscosity enhancing agents. The addition of 0.05-0.5 wt. % of a dispersion agent, can result in the requirement for viscosity enhancing agents falling by ~20% and/or a less potent viscosity enhancing agent being used with equivalent or better extrudability than compositions with the conventional levels of viscosity enhancing agent.

As will be clear to persons skilled in the art, and as discussed above, increasing the effectiveness of the viscosity enhancing agent to improve/maintain extrudability will also avoid or reduce common extrusion problems such as segregation, tearing, phase separation, dewatering, etc. It may also result in an increase in structural integrity and better retention of the shape of the extrudate.

In some cases, the improvement in extrudability has been demonstrated by increasing the speed of extrusion. For example, some cementitious formulations containing viscosity enhancing agent and optionally some dispersion agent may extrude but at a relatively low speed with a relatively high head pressure on the die. The applicant has found that by addition of a suitable quantity of dispersion agent, the speed of extrusion can be increased markedly and the head pressure on the die similarly reduced. Such results are normally achieved by increasing the quantity or grade of the viscosity enhancing agent in the cementitious paste. It is quite unexpected that such improvements can be achieved by the simple addition of a dispersion agent.

Examples of high grade viscosity enhancing agents are high molecular weight cellulose ethers, for example alkylcellulose or hydroxyalkyl alkylcellulose. Low grade VEA's can be the same compounds at a lower molecular weight. Suitably viscosity enhancing agents for use with the present invention include methyl cellulose, hydroxyethyl cellulose, hydroxyethylmethyl cellulose, hydroxypropylmethyl cellulose, carboxymethyl cellulose, ethyl cellulose, hydroxybutylmethyl cellulose, polyvinyl alcohol, clays, modified clays, Welan gum and other natural gums. The viscosity enhancing agent and/or dispersion agent can be added together or separately to the cementitious slurry or indeed included in the dry formulation prior to slurry preparation. As will be clear to persons skilled in the art, it is important that the dispersion agent and viscosity enhancing agent are thoroughly mixed through the slurry to provide homogenous mix.

Suitable dispersion agents include sulphonated melamine formaldehyde, sulphonated naphthalene formaldehyde, amino-sulphonate polymer, modified lignosulfonate materials and acrylic polymers such as copolymer of acrylic acid with acrylic ester, copolymers of acrylic acid with polycarboxylate ester and cross-linked acrylic polymers.

As discussed above, it is important when extruding a cementitious paste or slurry that stringent rheological criteria are met while minimising the cost due to the use of viscosity enhancing agents.

In order to determine suitable quantities of viscosity enhancing agent and dispersion agent, or indeed conduct comparative analysis of different formulations, a simple extrusion test may be conducted whereby a cementitious paste is provided including the viscosity enhancing agent and dispersion agent. The treated paste is then applied to a test die at a test pressure to confirm extrudability. As it will be clear to persons skilled in the art, exact quantities of viscosity enhancing agent and dispersion agent will depend on a number of factors including the type of agent used, the content of the cementitious paste and indeed the extrusion equipment in which the cementitious paste will be used.
It is not entirely clear at this stage why the synergistic effect between the dispersion agent and viscosity enhancing agent is obtained. The effect of the synergy does differ, however, between various viscosity enhancing agents and dispersion agents. While in some cases the efficacy of the viscosity enhancing agent has only been increased marginally, all mixtures have shown some synergistic effect and the applicant sees no basis on which the synergistic effect should not be maintained in a full scale operation.

The viscosity enhancing agent and dispersion agent can be added simultaneously or separately to the cementitious material. The viscosity enhancing agent and dispersion agent can be added as dry solids, either before or after the addition of water to the other solid components. The viscosity enhancing agent and dispersion agent can also be dispersed in water first and then added to the other solid components. Liquid, solid, solution, emulsion or suspension forms of viscosity enhancing agents and dispersion agents can be used.

It is also possible to provide the viscosity enhancing agent, dispersion agent and all other components of the product including cementitious material, density modifiers, fibres etc dry mixed together for subsequent mixing with water to form a paste or slurry. dispersed in water first and then added to the other solid components. Liquid, solid, solution, emulsion or suspension forms of viscosity enhancing agents and dispersion agents can be used.

It is also possible to provide the viscosity enhancing agent, dispersion agent and all other components of the product including cementitious material, density modifiers, fibres etc dry mixed together for subsequent mixing with water to form a paste or slurry.

Alternatively, some of the solid components eg cementitious material, lime, silica, density modifiers etc may be dry mixed with the viscosity enhancing agent thoroughly. Water may then be added to pre-wet the mixture. The dispersion agent may then be dissolved in the rest of the water and added to the solution to the mix. Mixing is generally not required for any longer than five minutes. Total wet mixing time should preferably not exceed 15 minutes. The resultant mixture is then kneaded for say around five minutes depending upon the effectiveness of the kneading facility. In this regard long kneading times should be avoided. The material is then suitable for use in the extrusion apparatus.

In an alternative form, a cementitious slurry or paste may be provided with the desired consistency, with suitable quantities of viscosity enhancing agent and dispersion agent be subsequently added as powder, to the paste. In this instance, longer kneading time may be required to thoroughly mix the viscosity enhancing agent and dispersion agent in the paste.

If desired, the viscosity enhancing agent and dispersion agent may be provided to the cementitious slurry or paste via separate components of the FRC mixture. To explain, it may be appropriate to pre-treat the reinforcing pulp fibre with a dispersion agent. The cementitious material could be pre-dosed with a viscosity enhancing agent whereby it is combined with a dispersion agent upon mixing with the fibre.

It should also be understood that more than one viscosity enhancing agent and more than one dispersion agent may be used in the mixture.

The compositions formed in the above mentioned ways may be cured at ambient temperature and pressure or at higher temperatures and pressures. Curing methods such as steaming at high temperatures or autoclaving at high temperatures and pressures are possible. Unlike the prior art, the resultant extruded cementitious material is suitable for autoclave curing. This is a further distinction over the prior art which use synthetic fibres unsuitable for autoclaving.

The exact regime of curing, such as pre-cure times, temperatures, pressures and cure times must be optimised for the specific formulation. As is well known, to achieve optimum strength it is important to avoid the cementitious products drying out during curing.

Compositions formed using the method of this invention show no adverse effects in terms of physical or mechanical properties during curing or afterwards when compared to specimens made with conventional techniques using high grade viscosity enhancing agents. In fact the use of dispersion agents appears to aid the forming of a superior surface finish.

The disclosed method and treatment agent are also particularly suitable for producing low density composite articles, that contain a high proportion of density modifying additives. Examples of such additives would be perlite, vermiculite, low density calcium silicate hydrate, ceramic hollow spheres, fly-ash etc. This invention can also be used with the addition of air entraining agents to modify density. Densities of 1.2 g/cm³ or below may be achieved using the present invention.

In still a further aspect, the present invention provides a method of forming a low density cementitious article comprising adding a cementitious material, density modifying additive, a viscosity enhancing agent and dispersion agent to water, extruding the resultant paste and curing the extruded article, wherein the dispersion agent is added in a quantity sufficient to increase the efficacy of the viscosity enhancing agent.

This invention also is suitable for compositions containing a variety of reinforcing fibres. Examples of such fibres would be wood pulp (cellulose) fibres, asbestos fibres, polymer fibres, glass or metal fibres. This is another advantage arising from the present invention. The prior art extrusion techniques are limited to particular fibres and particular fibre contents. The present invention allows an operator to choose the type and quantity of fibre to specifically match the article to its desired use eg up to around 25% vol.

Further, it has been found that the addition of viscosity enhancing agent and dispersion agent provides an extruded product with an improved surface finish. It is not entirely clear why this occurs, however, the applicant has found clear visible improvement in surface finish between extruded articles according to the present invention and those of the prior art. This is even true for articles with higher fibre contents ie 15% and above.

The present invention will now be described with reference to the following nonlimiting examples:

### EXAMPLE 1

A composition was prepared according to the materials and proportions indicated in Table 1, the solid components blended in a high speed Eirich mixer and then kneaded together with the water in a Hobart mixer. The paste produced was then extruded into sheets 50mm wide and 10mm thick using a Handle laboratory extruder with 75mm barrel. For each type of viscosity enhancing agent, repeat experiments were carried out with different addition levels to ascertain the minimum required for good extrusion, surface finish and shape retention. Table 2 lists the viscosity enhancing agents and dispersion agents trialed with some detail as to their origin, chemistry and cost. Table 3 lists the addition levels of viscosity enhancing agents and combinations of viscosity enhancing agents and dispersion agents that have equivalent performance in extrusion moulding and enables comparisons of the effect of the dispersion agent.

**Table 1**

| **Material** | **Details** | **Amount used** |
|---|---|---|
| Fibre | Bleached softwood Kraft pulp from Weyerhaeuser. | 11 % wt of solids |
| Cement | OPC Type 1 from Blue Circle Southern | Cement : Silica 60:40 |
| Silica Water | 200G milled quartz | Cement: Silica 60:40 30% of total weight |

**Table 2**

| **Type** | **Details** | **Cost** |
|---|---|---|
| VEA1 | Shin-Etsu 90SHV-WF Hydroxyethyl methyl cellulose (HEMC) (12,000 mPas, 1% solution @ 20° C, Brookfield) | US$8.00/kg |
| VEA2 | Wolff Walsrode Walocel VP-M20677 Hydroxyethyl methyl cellulose (HEMC) (75,000-85,000 mPas - 2% solution @ 20° C, Haake Rotovisko) | US$7.41/kg |
| VEA3 | Dow J75 | US$8.50/kg |
| | Hydroxypropyl methyl cellulose (HPMC) (75,000 mPas, 2% sol. And 3000 mPas, 1% sol.@ 20°C. Ubbelohde tube) | |
| VEA4 | Union Carbide Cellosize QP 100MH Hydroxyethyl cellulose (HEC) (4000-6000 mPas, 1% solution @ 25° C, Brookfield) | US$6.50/kg |
| VEA5 | Dow J20 Hydroxypropyl methyl cellulose (HPMC) (20,000 mPas, 2% sol. And 900 mPas, 1% sol.@ 20°C. Ubbelohde tube) | |
| VEA6 | Sigma Aldrich- 41,933-8 Carboxy methyl cellulose (CMC) Av Mol. Wt - 700,000 Degree of substitution = 0.9 | |
| DA1 | SKW Melment F15 Sulfonated melamine formaldehyde (SMF) | US$2.80/kg |

**Table 3**

| | **Amount required without DA1** | **Amount required with 0.2% DA1** | **Cost of formulation US$/tonne** | |
|---|---|---|---|---|
| | | | **OLD** | **NEW** |
| VEA1 | 1.5% | 1.2% | 158.22 | 145.38 |
| VEA2 | 1.5% | 1.2% | 151.98 | 140.39 |
| VEA3 | 1.75% | 1.5% | 163.89 | 149.92 |
| VEA4 | Inadequate performance | 1.2% | - | 132.77 |

### EXAMPLE 2

A composition was prepared according to the materials and proportions specified in Table 4. The solid components were blended in a high speed Eirich mixer and subsequently mixed with a water/VEA solution in a Hobart mixer. The paste produced was then extruded into sheets 50mm wide and 10mm thick using a Handle laboratory extruder with 75mm barrel. For each type of viscosity enhancing agent, repeat experiments were carried out with different addition levels to ascertain the minimum required for good extrusion, surface finish and shape retention. Table 6 shows the levels of viscosity enhancing agent required using the method of the new invention and without.

**Table 4**

| **Material** | **Details** | **Amount used** |
|---|---|---|
| Fibre | Bleached softwood Kraft pulp from Weyerhaeuser. | 9% wt. of solids |
| Cement | OPC Type 1 from Blue Circle Southern | Cement: Silica 60:40 |
| Silica | 200G milled quartz | Cement: Silica 60:40 |
| Density Modifier | Low density calcium silicate hydrate | 10% wt of solids |
| Water | | 38% of total weight (41 % when VEA6 is used). |

**Table 5**

| | **Amount required without DA1** | **Amount required with 0.3% DA1** | **Cost of Formulation USS/tonne** | |
|---|---|---|---|---|
| | | | **OLD** | **NEW** |
| VEA3 | 2% | 1.8% | 183.11 | 177.68 |
| VEA4 | Inadequate performance | 1.8% | - | 154.84 |
| VEA5 | Inadequate performance | 2% | - | - |
| VEA6 | Inadequate performance | 2.2% | - | 147.63* |

| | | | | |
|---|---|---|---|---|
| * Estimated price | | | | |

### EXAMPLE 3

Two compositions, one containing VEA3 (Mix 1) and the other VEA4/DA1 (Mix 2) were prepared according to the materials and proportions specified in Table 6. VEA3 is a high grade HPMC and VEA4 is a cheaper HEC compound. For each, all the solid components were blended in a high speed Eirich mixer. The dry solids were then kneaded together with the water in a Hobart mixer till a homogenous paste was formed. The paste produced was then extruded into sheets 50mm wide and 10mm thick using a Handle laboratory extruder with 75mm barrel. Half the samples were pre-cured at ambient conditions for 8 hours and the other half at ambient conditions for 36 hours. The strips were then cured in an autoclave under saturated steam pressure at 177° C for 8 hours. The mechanical properties of the two compositions were tested, and Graph 1 shows the results. It can be seen that there is no significant difference in the measured mechanical properties between samples made with VEA3 and VEA4/DA1. It was also observed that the sample made with VEA4/DA1 had the better surface finish of the two.

**Table 6**

| **Material** | **Details** | **Amount used** |
|---|---|---|
| Fibre | Bleached softwood Kraft pulp from Weyerhaeuser. | 9% wt. of solids |
| Cement | OPC Type 1 from Blue Circle Southern | Cement: Silica 60:40 |
| Silica Density Modifier | 200G milled quartz PQ Extendospheres (hollow ceramic spheres, effective density ~0.7 g/cc) | Cement: Silica 60:40 10% wt of solids |
| Water | | 30% of total weight |
| VEA3 | As in Table 2 | 2% in Mix 1 |
| VEA4 | As in Table 2 | 2% in Mix 2 |
| DA1 | As in Table 2 | 0.3% in Mix 2 |

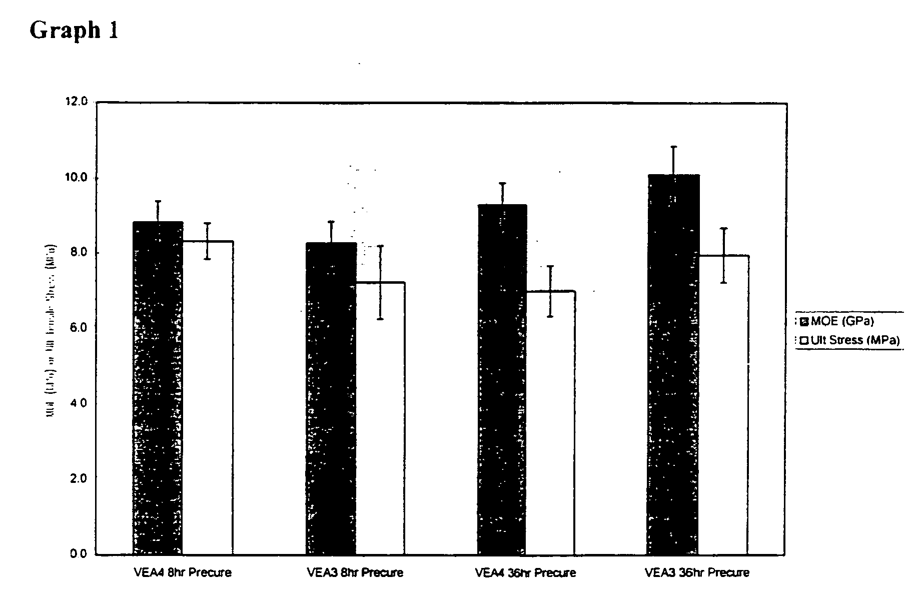

### EXAMPLE 4

A composition was prepared according to the materials and proportions indicated in Table 7, the solid components blended in a high speed Eirich mixer and then kneaded together with the water in a Hobart mixer. The paste produced was then extruded into sheets 50mm wide and 10 mm thick using Handlë laboratory extruder with a 75mm barrel. Table 8 describes the viscosity enhancing agent and dispersion agent used and Table 9 shows the levels of viscosity enhancing agent required with and without the dispersion agent and demonstrates the synergy.

**Table 7**

| **Material** | **Details** | **Amount Used** |
|---|---|---|
| Fibre | Bleached softwood Kraft pulp from Weyerhaeuser | 9% wt of solids |
| Cement | OPC Type from Blue Circle Southern | 60:40 cement:silica |
| Silica | 200G milled quartz | 60:40 cement:silica |
| Density Modifier | Low density calcium silicate hydrate | 30% wt of solids |
| Water | | 52% of total weight |

**Table 8**

| **Type** | **Details** | **Cost** |
|---|---|---|
| VEA 7 | Rheolate 101 from Elementis Alkali swellable modified polyacrylate emulsion (15 Pa.s, 1% sol.@ 1 1/S (shear rate) and PH=7.0, 25 deg. C Brookfield) | US$6.28/kg |
| DA1 | SKW Melment F15 Sulfonated Melamine Formaldhyde (SMF) | US$2.80/kg |

**Table 9**

| | **Amount required without DA1** | **Amount required with 0.3% DA1** | **Cost of Formulation (US$/tonne)** | |
|---|---|---|---|---|
| | | | OLD | NEW |
| VEA 7 | 5.5% | 4.5% | 233.87 | 206.63 |

It will be understood by persons skilled in the art that the following embodiments are shown by way of example only and that other applications/embodiments may be developed without departing from the spirit or scope of the present invention.

## Claims

1. The use of one or more dispersion agents in the extrusion of a cementitious material for the purposes of increasing the efficacy of a viscosity enhancing agent during extrusion, being a use wherein the viscosity enhancing agent is provided as 0.3 to 5 % by weight of dry solids of the cementitious material and the dispersion agent is provided as 0.05 to 0.5% by weight of dry solids of the cementitious material.

2. Use as claimed in claim 1 wherein the dispersion agent is added in a quantity sufficient to maintain extrudability of the cementitious material with a reduced dosage of viscosity enhancing agent as compared to a conventional dosage.

3. Use as claimed in claim 1 wherein the dispersion agent is added in a quantity sufficient to maintain extrudability of the cementitious material with a lower grade or lower molecular weight viscosity enhancing agent as compared to a conventional dosage.

4. Use as claimed in claim 1 wherein the dispersion agent is added in a quantity sufficient to improve extrudability for a quantity of viscosity enhancing agent substantially equivalent to a conventional dosage.

5. Use as claimed in any one of claims 1 to 4 wherein the viscosity enhancing agent is a cellulose ether.

6. Use as claimed in any one of claims 1 to 5 wherein the viscosity enhancing agent is hydroxy alkyl cellulose, hydroxy alkyl alkyl cellulose, carboxy alkyl cellulose or alkyl cellulose, or a mixture thereof.

7. Use as claimed in any one of claims 1 to 6 wherein the viscosity enhancing agent is selected from the group consisting of hydroxy propyl methyl cellulose, hydroxy ethyl methyl cellulose, methyl cellulose, hydroxy ethyl cellulose, carboxy methyl cellulose, ethyl cellulose and hydroxy butyl methyl cellulose, or mixtures thereof.

8. Use as claimed in any one of claims 1 to 7 wherein the viscosity enhancing agent is selecting from the group consisting of polyvinyl alcohols, gums including Welan gum, locust bean gum and guar gum, sodium alginate, swellable alkali emulsions of acrylic copolymers, clays or modified clays, polyethylene glycol and acrylic based polymers, or mixtures thereof.

9. Use as claimed in any one of claims 1 to 8 wherein the dispersion agent is a sulphonated type dispersion agent.

10. Use as claimed in any one of claims 1 to 9 wherein the dispersion agent is sulphonated melamine formaldehyde or sulphonated naphthalene formaldehyde.

11. Use as claimed in any one of claims 1 to 10 wherein the viscosity enhancing agent and dispersion agent are combined prior to treating the cementitious material.

12. Use as claimed in any one of claims 1 to 11 wherein the viscosity enhancing agent and dispersion agent are combined *in situ* with the cementitious material.

## Patentansprüche

1. Verwendung eines oder mehrerer Dispersionsmittel bei der Extrusion eines Zementmaterials mit dem Zweck, die Effizienz eines viskositätsverbessernden Mittels während der Extrusion zu verbessern, wobei das viskositätsverbessernde Mittel in einer Menge von 0,3 bis 5 Gew.-% der trockenen Feststoffe des Zementmaterials und das Dispersionsmittel in einer Menge von 0,05 bis 0,5 Gew.-% der trockenen Feststoffe des Zementmaterials bereitgestellt werden.

2. Verwendung gemäß Anspruch 1, wobei das Dispersionsmittel in einer Menge zugesetzt wird, die ausreichend ist, um die Extrusionsfähigkeit des Zementmaterials mit einer im Vergleich zur herkömmlichen Dosierung reduzierten Dosierung des viskositätsverbessernden Mittels aufrechtzuerhalten.

3. Verwendung gemäß Anspruch 1, wobei das Dispersionsmittel in einer Menge zugesetzt wird, die ausreichend ist, um die Extrusionsfähigkeit des Zementmaterials mit einer im Vergleich zur herkömmlichen Dosierung niederen Qualitätsstufe oder einem viskositätsverbessernden Mittels niedrigeren Molekulargewichts aufrechtzuerhalten.

4. Verwendung gemäß Anspruch 1, wobei das Dispersionsmittel in einer Menge zugesetzt wird, die ausreichend ist, um die Extrusionsfähigkeit für eine im Wesentlichen einer herkömmlichen Dosierung äquivalente Menge des viskositätsverbessernden Mittels zu verbessern.

5. Verwendung gemäß einem der Ansprüche 1 bis 4, wobei das viskositätsverbessernde Mittel Zelluloseether ist.

6. Verwendung gemäß einem der Ansprüche 1 bis 5, wobei das viskositätsverbessernde Mittel Hydroxyalkylzellulose, Hydroxyalkylalkylzellulose, Carboxyalkylzellulose oder Alkylzellulose oder eine Mischung davon ist.

7. Verwendung gemäß einem der Ansprüche 1 bis 6, wobei das viskositätsverbessernde Mittel ausgewählt ist aus der Gruppe bestehend aus Hydroxypropylmethylzellulose, Hydroxyethylmethylzellulose, Methylzellulose, Hydroxyethylzellulose, Carboxymethylzellulose, Ethylzellulose und Hydroxybutylmethylzellulose oder Mischungen davon.

8. Verwendung gemäß einem der Ansprüche 1 bis 7, wobei das viskositätsverbessernde Mittel ausgewählt ist aus der Gruppe bestehend aus Polyvinylalkoholen, Gummen umfassend Welangummi, Johannisbrotgummi und Guargummi, Natriumalginat, quellbare Alkali-Acrylsäurecopolymere, Tonerden oder modifizierte Tonerden, Polyethylenglycol und Polymere auf Basis von Acrylsäure oder Mischungen davon.

9. Verwendung gemäß einem der Ansprüche 1 bis 8, wobei das Dispersionsmittel ein Dispersionsmittel vom sulfonierten Typ ist.

10. Verwendung gemäß einem der Ansprüche 1 bis 9, wobei das Dispersionsmittel sulfonierter Melamin-Formaldehyd oder sulfonierter Naphthalin-Formaldehyd ist.

11. Verwendung gemäß einem der Ansprüche 1 bis 10, wobei das viskositätsverbessernde Mittel und das Dispersionsmittel vor Behandlung des Zementmaterials vereinigt werden.

12. Verwendung gemäß einem der Ansprüche 1 bis 11, wobei das viskositätsverbessernde Mittel und das Dispersionsmittel in situ mit dem Zementmaterial vereinigt werden.

## Revendications

1. Utilisation d'un ou plusieurs agent(s) de dispersion dans l'extrusion d'un matériau cimentaire afin d'augmenter l'efficacité d'un agent accroissant la viscosité pendant l'extrusion, étant une utilisation dans laquelle l'agent accroissant la viscosité est fourni à hauteur de 0,3 à 5 % en poids de solides secs du matériau cimentaire et l'agent de dispersion est fourni à hauteur de 0,05 à 0,5 % en poids de solides secs du matériau cimentaire.

2. Utilisation selon la revendication 1, dans laquelle l'agent de dispersion est ajouté en une quantité suffisante pour maintenir l'aptitude à l'extrusion du matériau cimentaire avec un dosage réduit d'agent accroissant la viscosité comparé à un dosage classique.

3. Utilisation selon la revendication 1, dans laquelle l'agent de dispersion est ajouté en une quantité suffisante pour maintenir l'aptitude à l'extrusion du matériau cimentaire avec un agent accroissant la viscosité de qualité inférieure ou de masse moléculaire inférieure comparativement à un dosage classique.

4. Utilisation selon la revendication 1, dans laquelle l'agent de dispersion est ajouté en une quantité suffisante pour améliorer l'aptitude à l'extrusion pour une quantité de l'agent accroissant la viscosité sensiblement équivalente à un dosage classique.

5. Utilisation selon l'une quelconque des revendications 1 à 4, dans laquelle l'agent accroissant la viscosité est un éther de cellulose.

6. Utilisation selon l'une quelconque des revendications 1 à 5, dans laquelle l'agent accroissant la viscosité est une hydroxy alkyl cellulose, une hydroxy alkyl alkyl cellulose, une carboxy alkyl cellulose ou une alkyl cellulose, ou un mélange de celles-ci.

7. Utilisation selon l'une quelconque des revendications 1 à 6, dans laquelle l'agent accroissant la viscosité est choisi dans le groupe constitué par l'hydroxy propyl méthyl cellulose, l'hydroxy éthyl méthyl cellulose, la méthyl cellulose, l'hydroxy éthyl cellulose, la carboxy méthyl cellulose, l'éthyl cellulose et l'hydroxy butyl méthyl cellulose ou les mélanges de celles-ci.

8. Utilisation selon l'une quelconque des revendications 1 à 7, dans laquelle l'agent accroissant la viscosité est choisi dans le groupe constitué par les poly(alcools vinyliques), les gommes comprenant la gomme Welan, la gomme de caroube et la gomme de guar, l'alginate de sodium, les émulsions alcalines gonflables de copolymères acryliques, les argiles ou argiles modifiées, le poly(éthylène glycol), et les polymères à base acrylique, ou les mélanges de ceux-ci.

9. Utilisation selon l'une quelconque des revendications 1 à 8, dans laquelle l'agent de dispersion est un agent de dispersion de type sulfoné.

10. Utilisation selon l'une quelconque des revendications 1 à 9, dans laquelle l'agent de dispersion est le formaldéhyde mélamine sulfonée ou le formaldéhyde naphtalène sulfonée.

11. Utilisation selon l'une quelconque des revendications 1 à 10, dans laquelle l'agent accroissant la viscosité et l'agent de dispersion sont combinés avant de traiter le matériau cimentaire.

12. Utilisation selon l'une quelconque des revendications 1 à 11, dans laquelle l'agent accroissant la viscosité et l'agent de dispersion sont combinés *in situ* au matériau cimentaire.
